(19) Europäisches Patentamt
European Patent Office
Office européen des brevets

(11) Veröffentlichungsnummer: **0 305 761 B1**

(12) **EUROPÄISCHE PATENTSCHRIFT**

(45) Veröffentlichungstag der Patentschrift :
03.07.91 Patentblatt 91/27

(51) Int. Cl.⁵: $F16H\ 61/42$, $F16H\ 39/10$

(21) Anmeldenummer: 88112726.0

(22) Anmeldetag: 04.08.88

(54) Sekundärgeregeltes hydrostatisches Getriebe mit offenem Kreislauf.

(30) Priorität: 03.09.87 DE 3729495

(43) Veröffentlichungstag der Anmeldung :
08.03.89 Patentblatt 89/10

(45) Bekanntmachung des Hinweises auf die
Patenterteilung :
03.07.91 Patentblatt 91/27

(84) Benannte Vertragsstaaten :
DE FR GB IT SE

(56) Entgegenhaltungen :
EP-A- 0 217 367
AT-B- 359 795
DE-A- 3 404 190
US-A- 4 351 152
US-A- 4 478 041
Hydrostatische Getriebe, Carl Hauser Verlag
1964, S. 68-70

(73) Patentinhaber : BRUENINGHAUS HYDRAULIK
GmbH
An den Kelterwiesen 14
W-7240 Horb 1 (DE)

(72) Erfinder : Berthold, Heinz
Griesweg
W-7240 Horb 1 (DE)

(74) Vertreter : Körber, Wolfhart, Dr.rer.nat. et al
Patentanwälte Dipl.-Ing. H. Mitscherlich
Dipl.-Ing. K. Gunschmann Dr.rer.nat. W.
Körber Dipl.Ing. J. Schmidt-Evers Dipl.-Ing. W.
Melzer Steinsdorfstrasse 10
W-8000 München 22 (DE)

EP 0 305 761 B1

## Beschreibung

Die Erfindung bezieht sich auf ein hydrostatisches Getriebe, bestehend aus einer von einer Antriebsmaschine drehangetriebenen Pumpe (Primäreinheit) und einem einen Verbraucher drehantriebenen Motor (Sekundäreinheit). Pumpe und Motor sind jeweils aus einer Hydraulikmaschine veränderbaren Fördervolumens, insbesondere Axialkolbenmaschine, gebildet, die in einem offenen Kreislauf zusammenwirken, bei dem die Pumpe Arbeitsmedium aus einem Tank ansaugt, mit dem Motor über eine Arbeitsdruckleitung verbunden ist und der Motor das Arbeitsmedium an den Tank abgibt.

Solche hydrostatische Getriebe im offenen Kreislauf mit sogenannter Primärverstellung und sogenannter Sekundärverstellung sind bekannt. Wird die Primäreinheit (Pumpe) auf abgegebenen konstanten Arbeitsdruck geregelt, so ist für die Regelung der Drehzahl des Sekundärteiles (Motor) wesentlich, daß dieser in Folge des konstanten, von der Primäreinheit gelieferten Arbeitsdruckes immer ein zu seiner Schluckvolumeneinstellung proportionales Drehmoment an seiner Ausgangswelle für den Verbraucher abgibt, solange die Verlustmomente vernachlässigbar sind (Buch Jean Thoma, "Hydrostatische Getriebe", Karl-Hanser-Verlag, München 1964, S. 68 bis 70). Soll in einem solchen Getriebe mit offenem Kreislauf die Richtung des Energieflusses wechseln, d.h. soll der Motor (Sekundäreinheit) als Pumpe und die Pumpe (Primäreinheit) als Motor arbeiten, so muß der Drehsinn von Pumpe und Motor geändert werden oder sowohl die Primär- als auch die Sekundäreinheit müssen in ihrer Fördervolumeneinstellung durch die Null-Fördervolumen-Mittellage hindurchgeschwenkt werden. Eine Änderung der Richtung des Energiestromes, insbesondere Bremsbetrieb, unter Beibehaltung der Eingangs- und Ausgangsdrehrichtung ist in einem solchen hydrostatischen Getriebe ohne besondere Steuerorgane nicht möglich (Ölhydraulik und Pneumatik, Schriftenreihe Band 1, Grundschaltpläne hydraulische Anlagen (1963), S. 74, 75). Mit der Änderung der Richtung des Energiestromes unter Umkehr der Förderstromrichtung in der Arbeitsdruckleitung, ermöglicht durch die Schwenkung der Pumpe durch die Nullage hindurch auf negatives Fördervolumen (Schluckvolumen), gibt noch keine Lehre darüber, wie ein Bremsbetrieb erreicht werden kann, d.h. ein Verbraucher über ein solches Getriebe abgebremst werden kann, ohne die Bremsenergie durch Abblasen und Erwärmen des zurückgeförderten Arbeitsmediums zu vernichten.

In der DE-A 34 04 190 ist ein hydrostatisches Getriebe in der Ausführung mit drehzahlgeregeltem Hydromotor (Sekundärregelung) in einem geschlossenen Arbeitsdruckkreislauf beschrieben. Die für den geschlossenen Kreislauf erforderlichen Elemente zum Aufrechterhalten des niederdruckseitigen Speisedruckes, wie Speisepumpe, Speisedruckbegrenzungsventil und evtl. erforderlicher Speicher, sind im Schaltplan nicht dargestellt, obwohl für ein im geschlossenen Kreislauf betriebenes hydrostatisches Getriebe selbstverständlich und notwendig.

Der Erfindung liegt bei einem wegen seiner Einfachheit im offenen Kreislauf betriebenen hydrostatischen Getriebe die Aufgabe zugrunde, die Regelung der Primäreinheit und der Sekundäreinheit so auszubilden, daß ein sehr schnelles Umschalten des Energieflusses ermöglicht ist und auch im Bremsbetrieb die Bremsleistung an der Pumpe (Primäreinheit), die dann als Motor arbeitet, nicht verloren geht.

Gelöst wird diese Aufgabe bei einem hydrostatischen Getriebe der eingangs genannten Art, bei dem
– die Pumpe und der Motor mittels je einer Fördervolumen-Verstelleinrichtung in ihrer Förderrichtung kontinuierlich über eine Null-Fördervolumen-Mittellage nach zwei Förderrichtungen verstellbar sind,
– der Fördervolumen-Verstelleinrichtung der Primäreinheit ein Druck-Förderstromregler zugeordnet ist, der durch Fördervolumeneinstellung der Primäreinheit den Druck in der Arbeitsdruckleitung auf einen einstellbaren Wert konstant hält,
– der Fördervolumen-Verstelleinrichtung der Sekundäreinheit ein Drehzahl-Förderstromregler zugeordnet ist, der einen Wegaufnehmer zur Erfassung der Förderstromeinstellung aufweist,
– der Sekundäreinheit eine Drehzahlerfassungseinrichtung zugeordnet ist,
– und eine Regelelektronik vorgesehen ist, mit welcher der Wegaufnehmer und die Drehzahlerfassungseinrichtung verbunden sind, und welche die Ist-Drehzahl und die Ist-Fördervolumeneinstellung aufnimmt und der Fördervolumen-Verstelleinrichtung der Sekundäreinheit ein Regelsignal zuführt, welches von der Regelelektronik entsprechend einer einstellbaren Soll-Drehzahl gebildet ist.

Die Fördervolumen-Verstelleinrichtung der Pumpe (Primäreinheit) hält die Pumpe stets auf konstantem Arbeitsdruck, unabhängig von der Energieflußrichtung. Die Primäreinheit ist über die Nullage auf negatives Fördervolumen (Schluckvolumen) schwenkbar und kann damit unter Beibehaltung der Drehrichtung als Motor laufen und Energie an die Antriebsmaschine der Pumpe zurückgeben, den Verbraucher an dem Motor (Sekundäreinheit) also abbremsen. Die Regelelektronik vergleicht stets die vorgegebene Soll-Drehzahl mit der Ist-Drehzahl des Motors (Sekundäreinheit) und stellt damit das von der Sekundäreinheit an den Verbraucher abgegebene oder von diesem aufgenommene Drehmoment fest. Entsprechend erfolgt durch Änderung der Fördervolumeneinstellung an der Sekundäreinheit die Einstellung des Schluckvolumens oder – im Falle vom Verbraucher abgegebenen Drehmomentes (Bremsbetrieb) – Fördervolumens an der Sekundäreinheit, um die

2

Soll-Drehzahl zu erreichen. Aus letztgenanntem Zustand – Drehmoment vom Verbraucher und Sekundäreinheit durch Null-Fördervolumen-Mittellage hindurch auf Fördervolumen eingestellt – resultiert eine Druckerhöhung in der Arbeitsdruckleitung über den am Druck-Förderstromregler der Primäreinheit eingestellten konstanten Wert hinaus, und diese führt durch den Druck-Förderstromregler der Primäreinheit zu einem Zurückschwenken der Pumpe (Primäreinheit) auf kleinere Fördermenge bis über die Null-Fördervolumen-Mittellage hinaus zu negativer Fördermenge entsprechend einem Schluckvolumen, so daß die Primäreinheit als Motor arbeitet. Das Getiebe ist damit ausschließlich sekundär geregelt. Die Primäreinheit ist ausschließlich in Abhängigkeit vom Druck – auftretenden Abweichungen von dem voreingestellten Arbeitsdruck in der Arbeitsdruckleitung – geregelt, auch bei Umkehr des Energieflusses, also bei Bremsbetrieb.

Da bei dem erfindungsgemäßen Getriebe Pumpe und Motor ihre Funktionen vertauschen können und dann von Motor und Pumpe zu sprechen wäre, wird ausgehend von der Regelungsart zutreffend besser von Primäreinheit und Sekundäreinheit gesprochen. Entsprechend braucht dann nicht je nach Betriebszustand zwischen Fördervolumen und Schluckvolumen der Einheiten unterschieden zu werden, und es kann nur von Fördervolumen, ggfs. auch negativem Fördervolumen, gesprochen werden. Die Bezeichnung des der Fördervolumen-Verstelleinrichtung der Primäreinheit zugeordneten Reglers als Druck-Förderstromregler drückt aus, daß das Fördervolumen der Primäreinheit durch einen (vorgebbaren) Druck geregelt wird. Die Bezeichnung des der Fördervolumen-Verstelleinrichtung der Sekundäreinheit zugeordneten Reglers als Drehzahl-Förderstromregler bringt zum Ausdruck, daß das Fördervolumen der Sekundäreinheit in Abhängigkeit von einer (vorgebbaren) Drehzahl geregelt wird, was bedeutet, daß die Sekundäreinheit in Abhängigkeit von dem von ihr an den Verbraucher abgegebenen oder von dem Verbraucher kommenden Drehmoment geregelt wird.

Das erfindungsgemäße Getriebe ermöglicht es, daß bei gleichbleibender Drehrichtung an der Primäreinheit die Sekundäreinheit in beiden Drehrichtungen arbeiten kann und außerdem seine Funktion in Pumpenbetrieb umwandeln kann, wobei das von ihr aufgenommene Bremsmoment auf die Primäreinheit übertragen wird, die dieses Moment an ihre Antriebsmaschine energiesparend abgibt (zurückgibt). Das erfindungsgemäße Getriebe kann also auch als Rotationsgetriebe bezeichnet werden, und für die Sekundärseite liegt sogenannter Vierquadrantenbetrieb vor, welcher unten in Verbindung mit den Zeichnungen ausführlich erläutert wird. Das Besondere dieses Vierquadrantenbetriebes besteht darin, daß er mit einem erfindungsgemäßen Getriebe im offenen Kreislauf unter Beibehaltung der einen Arbeitsdruckleitung als Hochdruckleitung erreicht wird. Neben der Umkehr des Energieflusses hat das erfindungsgemäße Getriebe damit den weiteren entscheidenden Vorteil, daß Drehmomentumkehr und Drehzahländerungen sehr schnell und unverzüglich wirksam werden, da der voreingestellte konstante Arbeitsdruck in der Arbeitsdruckleitung mit Ausnahme der erforderlichen Regelschwankungen stets aufrechterhalten bleibt und die Drehzahländerung an Sekundäreinheit und Primäreinheit und damit die Drehmomentumkehr allein von der Schnelligkeit der Änderung der Fördervolumeneinstellung an Sekundäreinheit und Primäreinheit abhängt. Diese Fördervolumenverstellung kann mit modernen Hydraulikmaschinen extrem schnell, in der Größenordnung von einigen Millisekunden, erfolgen.

In zweckmäßiger Ausbildung der Erfindung weist die Fördervolumen-Verstelleinrichtung der Primäreinheit wie auch der Sekundäreinheit einen in Stellrichtung kleineres Fördervolumen bis maximal negatives Fördervolumen einerseits mit Steuermedium beaufschlagbaren Stellkolben auf, der andererseits durch eine Feder von der Stellung maximal negatives Fördervolumen über die Null-Fördervolumen-Mittelage der zugehörigen Fördervolumen-Verstelleinrichtung hinaus in Richtung maximal positives Fördervolumen vorgespannt ist.

Es ist auch möglich, den Fördervolumen-Verstelleinrichtungen der Primäreinheit und der Sekundäreinheit jeweils einen mit Steuermedium auf seiner einen und/oder anderen Seite beaufschlagbaren Stellkolben zuzuordnen, der zwischen seinen Stellungen maximal positives und maximal negatives Fördervolumen durch Federn mittenzentriert ist. Hierdurch läßt sich die Durchsatzmengeneinstellung vereinfachen, und diese Ausgestaltung ermöglicht auch die Einstellung der Verstelleinrichtungen mit jeweils nur einem Verstellkolben.

Dabei weist der Druck-Förderstromregler der Primäreinheit ein erstes Druckregelventil auf, welches einerseits vom Arbeitsdruck in der Arbeitsdruckleitung und andererseits durch eine einstellbare Feder beaufschlagt ist und Arbeitsmedium dem Stellkolben der Fördervolumen-Verstelleinrichtung der Primäreinheit als Steuermedium zuführt oder in den Tank abführt. Der Drehzahl-Förderstromregler der Sekundäreinheit weist dabei ein Regelventil auf, welches durch das Regelsignal der Regelelektronik verstellbar ist und Arbeitsmedium dem Stellkolben der Sekundäreinheit als Steuermedium zuführt oder in den Tank abführt.

Diese Ausbildung der Regler hat folgende entscheidende Vorteile : Es ist weder eine Einspeisepumpe noch eine Steuerdruckpumpe für das Steuermedium erforderlich, da das Steuermedium für beide Regler aus dem Arbeitsdruckmedium abgezweigt wird. Es sind keine primären und keine sekundären Druckbegrenzungsventile erforderlich, so daß der bauliche Aufwand klein gehalten ist. Primäreinheit und Sekundäreinheit haben einschließlich ihrer Verstelleinrichtung grundsätzlich den gleichen Aufbau. Es können übereinstimmende Bauteile verwendet werden. Primärseite und Sekundärseite des Getriebes unterscheiden sich nur durch die den Verstelleinrichtungen zugeordneten Regler, den Druck-Förderstromregler bei der Primäreinheit und den Drehzahl-Förderstromregler bei der Sekundäreinheit.

In zweckmäßiger Ausgestaltung der Erfindung ist in der Arbeitsdruckleitung ein in Fließrichtung des Arbeitsmediums von der Primäreinheit zur Sekundäreinheit schließendes Rückschlagventil angeordnet, welches als entsperrbares Rückschlagventil ausgebildet ist und durch ein von der Regelelektronik geliefertes Signal in seiner geöffneten Stellung arretierbar ist. Zweckmäßig ist das entsperrbare Rückschlagventil durch ein Schaltventil hydraulisch schaltbar, welches bei Nichtvorhandensein des Signales von der Regelelektronik das Rückschlagventil in seine Sperr-Funktionsstellung schaltet. Dieses entsperrbare Rückschlagventil in der Arbeitsdruckleitung hat erstens eine Sicherheitsfunktion und ermöglicht zweitens den Betrieb des erfindungsgemäßen Getriebes in Standby-Betrieb. Zu letzterem weist der Druck-Förderstromregler der Primäreinheit ein zweites Druckregelventil auf, welches dem ersten Druckregelventil funktionell parallel geschaltet ist und welches einerseits vom Arbeitsdruck in der Arbeitsdruckleitung zwischen Primäreinheit und Rückschlagventil und andererseits durch eine einstellbare Feder sowie dem Druck in der Arbeitsdruckleitung zwischen Rückschlagventil und Sekundäreinheit beaufschlagt ist und Arbeitsmedium dem Stellkolben der Fördermengen-Verstelleinrichtung der Primäreinheit als Steuermedium zuführt oder in den Tank abführt. Die Funktionsweise des zweiten Druckregelventiles an dem Druck-Förderstromregler der Primäreinheit für die Durchführung eines Standby-Betriebes wird unten anhand des Ausführungsbeispiels näher erläutert.

Die Sicherheitsfunktion des entsperrbaren Rückschlagventiles beruht darauf, daß für den Fall, daß einer der der Regelelektronik zugeführten oder von dieser abgegebenen Signale oder Signalwerte für Soll-Drehzahl, Ist-Drehzahl oder Fördervolumeneinstellung der Sekundäreinheit oder auch das Signal für das Entsperren des Rückschlagventiles nicht auftreten, das Rückschlagventil schließt. Befindet sich die Sekundäreinheit in diesem Zeitpunkt in Antriebsfunktion für ihren Verbraucher, nimmt also über das Arbeitsdruckmedium von der Primäreinheit Leistung auf, so wird durch das Rückschlagventil der Förderstrom zur Sekundäreinheit unterbrochen und die Sekundäreinheit von der Primäreinheit im Ergebnis abgekoppelt. Die Primäreinheit schwenkt gegen die Fördervolumeneinstellung Null unter Aufrechterhaltung des voreingestellten konstanten Arbeitsdruckes des Arbeitsdruckmediums in der Arbeitsdruckleitung vor dem Rückschlagventil. Befindet sich in dem genannten Zeitpunkt die Sekundäreinheit im Zustand aufgenommenen Drehmomentes (Bremsbetrieb), so läßt des Rückschlagventil das Arbeitsdruckmedium passieren, und der Bremsbetrieb erfolgt durch Abstützung an der Primäreinheit wie beschrieben so lange, bis der Verbraucher an der Sekundäreinheit abgebremst ist. Es sei darauf hingewiesen, daß das entsperrbare Rückschlagventil in der Arbeitsdruckleitung im normalen Betrieb des Getriebes keinerlei Drosselwirkungen hat und keinen Einfluß auf die Drehzahlregelung der Sekundäreinheit.

In weiterer zweckmäßiger Ausgestaltung der Erfindung sind der Primäreinheit mit Druck-Förderstromregler zwei oder mehrere Sekundäreinheiten mit Drehzahl-Förderstromregler, Wegaufnehmer, Drehzahlerfassungseinrichtung und Regelelektronik über je ein genanntes entsperrbares Rückschlagventil in der Arbeitsdruckleitung zugeordnet. Die erfindungsgemäße Auslegung der Primärregelung und Sekundärregelung ermöglicht es überraschend, mit einer Primäreinheit auch mehrere Sekundäreinheiten zu verbinden und dabei alle vorbeschriebenen erfindungsgemäßen Funktionen und Vorteile für jede Sekundäreinheit beizubehalten. Dabei ist der Anschluß jeder weiteren Sekundäreinheit über ein entsperrbares Rückschlagventil sogar nur dann erforderlich, wenn die vorbeschriebene Sicherheitsfunktion und die Standby-Funktion beibehalten werden sollen. Beim Anschluß mehrerer Sekundäreinheiten an eine Primäreinheit erscheint dies jedoch sinnvoll.

In der erfindungsgemäßen Ausgestaltung mit mehreren Sekundäreinheiten stellt sich die Primäreinheit – solange der einstellbare konstante Arbeitsdruckwert von ihr aufrechterhalten werden kann – als Energiequelle für beliebig viele Sekundäreinheiten dar, welche je nach Betriebszustand, insbesondere im Bremsbetrieb, auch Leistung an die Primäreinheit zurückführen können, die diese Leistung für die an die anderen angeschlossenen Sekundäreinheiten angeschlossenen Verbraucher zur Verfügung hat, ohne diese Leistung von ihrer Antriebsmaschine abnehmen zu müssen.

In weiterer Ausgestaltung der Erfindung ist es auch möglich, daß der Primäreinheit mit Druck-Förderstromregler mindestens eine Sekundäreinheit mit Drehzahl-Förderstromregler, Wegaufnehmer, Drehzahlerfassungseinrichtung und Regelelektronik über ein genanntes entsperrbares Rückschlagventil in der Arbeitsdruckleitung zugeordnet ist und daß an die Arbeitsdruckleitung zwischen Primäreinheit und Rückschlagventil ein weiterer Verbraucher, insbesondere ein Stellzylinder, der über ein Geberregelventil speisbar ist, angeschlossen ist. Auch ein solcher Stellzylinder als Verbraucher kann bei seiner von seine Last ausgelösten Rückwärtsbewegung sich unter Rückgewinnung der Leistung an der Primäreinheit abstützen.

Das erfindungsgemäße Getriebe eignet sich insbesondere für die Anwendung in einem Prüfstand für Verbrennungskraftmaschinen, wo für das Testen der Verbrennungskraftmaschinen plötzliche Last- und Drehzahlwechsel simuliert werden müssen. Dafür kann eine Testprogramm durch Eingabe entsprechender Soll-Drehzahlen an der Regelelektronik dienen.

Eine beispielsweise Ausführungsform der Erfindung wird im folgenden anhand der Zeichnung näher beschrieben. Es zeigen

Fig. 1 und 2      Diagramme für die Primäreinheit und Sekundäreinheit zur Erläuterung des Vierquadrantenbetriebes,

Fig. 3      ein Schaltschema des hydrostatischen Getriebes mit seinen Komponenten und

Fig. 4      eine Abwandlung der Sekundäreinheit als Einzelheit.

In den Diagrammen und in dem Schaltschema sowie in der nachfolgenden Beschreibung bedeuten

$N_{l,r}$      Drehzahlen an den An- und Abtriebswellen der Primär- und Sekundäreinheit

$n_{soll}$      an der Regelelektronik einstellbare Soll-Drehzahl der Sekundäreinheit

$n_{ist}$      Ist-Drehzahl der Sekundäreinheit

$\alpha$      Fördervolumeneinstellung (Schwenkwinkel) der Einheiten

$\pm\alpha$      positiver oder negativer Schwenkwinkel, können je nach Drehrichtung der Einheit einem positiven Förderstrom, von der Einheit abgegeben, oder einem negativen Förderstrom (Schluckvermögen), von der Einheit aufgenommen, entsprechen

$\pm Q$      positives oder negatives Fördervolumen

$\pm M\alpha$      abgegebenes (−) und aufgenommenes (+) Drehmoment der Primär- und Sekundäreinheit

$p$      Arbeitsdruck in der Arbeitsdruckleitung des Getriebes

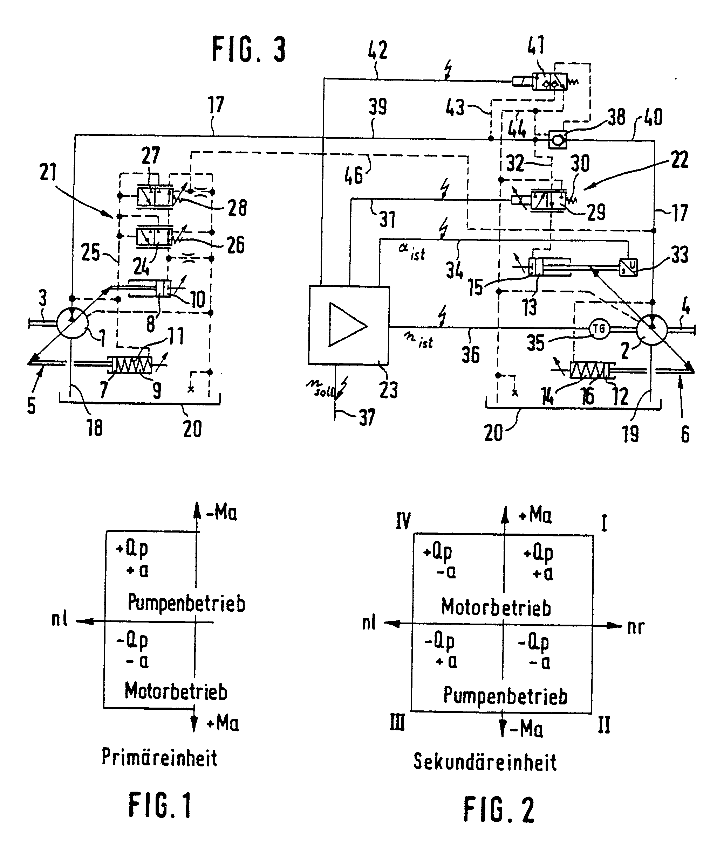

In den Diagrammen nach Fig. 1 und 2 sind die Drehzahl der Primär- bzw. Sekundäreinheit als Abszissen und das Drehmoment als Ordinaten aufgetragen. Bei konstruktiv und leistungsmäßig durch die Antriebsmaschine der Primäreinheit vorgegebener Maximaldrehzahl und entsprechenden Maximalmomenten können Primäreinheit und Sekundäreinheit innerhalb der in den Diagrammen nach Fig. 1 und 2 angegebenen Quadranten I bis IV eingezeichneten Rechteckflächen nach Drehzahl und Drehmoment geregelt werden.

Der Vierquadrantenbetrieb der Sekundäreinheit stellt sich folgendermaßen dar:

I. Quadrant, d.h. Motorbetrieb der Sekundäreinheit mit abgegebenem Drehmoment $+M\alpha$ – Drehrichtung rechts ($n_r$)

– Arbeitsmedium fließt von der Primäreinheit zur Sekundäreinheit
– Schwenkwinkel $+\alpha$ an der Sekundäreinheit (bedeutet hier Schluckvolumen, da Primäreinheit entgegengesetzte Drehrichtung zur Sekundäreinheit)
– Primäreinheit im Pumpenbetrieb, Schwenkwinkel $+\alpha$, Drehrichtung der Primäreinheit links ($n_l$)

II. Quadrant, d.h. Pumpenbetrieb der Sekundäreinheit -Drehrichtung rechts ($n_r$)

– Arbeitsmedium fließt von Sekundäreinheit zur Primäreinheit (Bremsbetrieb)
– Schwenkwinkel $-\alpha$ an der Sekundäreinheit (entspricht hier Fördervolumen, da Drehzahlen zwischen Primäreinheit und Sekundäreinheit entgegengesetzt)
– Primäreinheit im Motorbetrieb, Schwenkwinkel $-\alpha$, Drehrichtung der Primäreinheit links ($n_l$)

III. Quadrant, d.h. Pumpenbetrieb der Sekundäreinheit -Drehrichtung links ($n_l$)

– Arbeitsmedium fließt von der Sekundäreinheit zur Primäreinheit (Bremsbetrieb)
– Schwenkwinkel $+\alpha$ an der Sekundäreinheit (bedeutet hier tatsächlich positives Fördervolumen, da gleiche Drehrichtung für Primär- und Sekundäreinheit)
– Primäreinheit im Motorbetrieb, Schwenkwinkel $-\alpha$ (negatives Fördervolumen = Schluckvolumen), Drehrichtung der Primäreinheit links ($n_l$)

IV. Quadrant, d.h. Motorbetrieb der Sekundäreinheit -Drehrichtung links ($n_l$)

– Arbeitsmedium fließt von der Primäreinheit zur Sekundäreinheit
– Schwenkwinkel $-\alpha$ an der Sekundäreinheit (Schluckvolumen)
– Primäreinheit im Pumpenbetrieb, Schwenkwinkel $+\alpha$ (positives Fördervolumen) der Primäreinheit, Drehrichtung der Primäreinheit links ($n_l$)

Auch diese beschriebenen Funktionsstellungen im Vierquadrantenbetrieb zeigen, daß Primäreinheit und Sekundäreinheit in ihrer baulichen Ausbildung entsprechend ihren äquivalenten Funktionen grundsätzlich gleich sind.

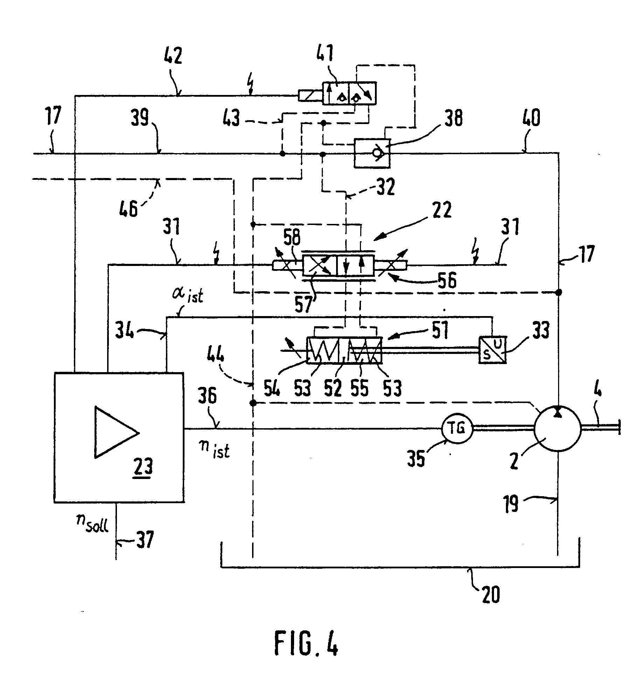

In Fig. 3, dem Schaltschema des hydrostatischen Getriebes, ist die Primäreinheit mit 1 und die Sekundäreinheit mit 2 bezeichnet. An der Welle 3 der Primäreinheit 1 ist eine nicht dargestellte Antriebsmaschine angeschlossen, an der Welle 4 der Sekundäreinheit 2 ist ein drehanzutreibender Verbraucher, nicht dargestellt, angeschlossen. Die Verstelleinrichtung der Primäreinheit ist mit 5, die Verstelleinrichtung der Sekundäreinheit 2 mit 6 bezeichnet. Die Verstelleinrichtung 5 der Primäreinheit 1 umfaßt einen in zwei Kolben 7 und 8 aufgeteilten zweiseitig beaufschlagbaren Stellkolben, welche in Zylinderräumen 9, 10 arbeiten. In dem Zylinderraum 9 befindet sich eine Feder 11, welche auf den Kolben 7 einwirkt und die Primäreinheit 1 in Richtung volles Fördervolumen, Schwenkwinkel +$\alpha$, vorspannt. In dem Zylinderraum 10 wirkt auf die Kolbenfläche des Kolbens 8, welche größer ist als die wirksame Kolbenfläche des Kolbens 7, ein Stelldruck wie unten erläutert. Die Verstelleinrichtung 6 der Sekundäreinheit 2 umfaßt einen in zwei Kolben 12 und 13 aufgeteilten zweiseitig beaufschlagbaren Stellkolben, welche in Zylinderräumen 14, 15 arbeiten. In dem Zylinderraum 14 befindet sich eine Feder 16, welche auf den Kolben 12 einwirkt und die Sekundäreinheit 2 in Richtung volles Fördervolumen, Schwenkwinkel +$\alpha$, vorspannt. In dem Zylinderraum 15 wirkt auf die Kolbenfläche des Kolbens 13, welche größer ist als die wirksame Kolbenfläche des Kolbens 12, ein Stelldruck wie unten erläutert.

Primäreinheit 1 und Sekundäreinheit 2 sind durch eine Arbeitsdruckleitung 17 einerseits verbunden und andererseits über Leitungen 18, 19 mit dem drucklosen Tank 20. Der Verstelleinrichtung 5 der Primäreinheit 1 ist ein Druck-Förderstromregler 21 zugeordnet. Der Verstelleinrichtung 6 der Sekundäreinheit 2 ist ein Drehzahl-Förderstromregler 22 zugeordnet sowie eine Regelelektronik 23.

Der Druck-Förderstromregler 21 besteht aus einem ersten Druckregelventil 24, dessen Steuerschieber einerseits von dem Druck eines von der Arbeitsdruckleitung 17 abgezweigten und in der Steuerleitung 25 anstehenden Steuermedium beaufschlagt ist und andererseits durch eine einstellbare Feder 26 belastet ist. Das erste Druckregelventil 24 führt dem Zylinderraum 10 aus der Leitung 25 je nach Regelstellung Steuermedium zur Verstellung der Primäreinheit zu oder verbindet den Zylinderraum 10 mit dem Ablauf. Parallel zu dem ersten Druckregelventil 24 liegt ein zweites Druckregelventil 27, dessen Steuerschieber ebenfalls einerseits von dem Druck des Steuermediums der Steuerleitung 25 beaufschlagt ist und andererseits von einer einstellbaren Feder 28. Das zweite Druckregelventil 27 kann ebenfalls dem Zylinderraum 10 Steuermedium zuführen oder aus dem Zylinderraum 10 abführen.

Der Drehzahl-Förderstromregler 22 der Sekundäreinheit 2 besteht aus einem Regelventil 29, dessen Steuerschieber einerseits von einer Feder 30 belastet ist und andererseits von einem elektro-magnetischen Ansteuerglied, welches durch das in der von der Regelelektronik 23 kommenden elektrischen Leitung 31 anstehende Regelsignal angesteuert wird. Das Regelventil 29 verbindet die aus der Arbeitsdruckleitung 17 abzweigende Steuerleitung 32 mit dem Zylinderraum 15 der Verstelleinrichtung 6 und speist den Zylinderraum 15 mit aus dem Arbeitsmedium über die Leitung 32 abgezweigtem Stellmedium oder führt letzteres aus dem Zylinderraum 15 zum Tank 20 ab. Der Drehzahl-Förderstromregler 22 der Sekundäreinheit 2 umfaßt weitere einen Wegaufnehmer 33, welcher beispielsweise als Potentiometer ausgebildet ist und über die elektrische Leitung 34 der Regelelektronik 23 ein Signal zuführt, welches der Stellung des Kolbens 13 und damit der Schwenkstellung $\alpha_{Ist}$ entsprechend Fördervolumeneinstellung der Sekundäreinheit 2 entspricht. Auf der Welle 4 der Sekundäreinheit 2 ist weiter eine Drehzahlerfassungseinrichtung in Form eines Tachogenerators 35 angeordnet, welche über eine elektrische Leitung 36 der Regelelektronik 23 ein Signal zuführt, welches der Drehzahl $n_{Ist}$ der Sekundäreinheit 2 entspricht. Über die elektrische Leitung 37 wird der Regelelektronik 23 ein Signal zugeführt, welches einstellbar ist und der gewünschten Soll-Drehzahl $n_{soll}$ der Sekundäreinheit entspricht.

In zweckmäßiger Ausbildung ist in der Arbeitsdruckleitung 17 ein sogenanntes entsperrbares Rückschlagventil 38 angeordnet, welches in seiner Sperr-Funktionsstellung in Förderstromrichtung von der Primäreinheit 1 zur Sekundäreinheit 2 sperrt, d.h. den Förderstrom in der Leitung 17 unterbricht. Die Arbeitsdruckleitung 17 wird durch das Rückschlagventil 38 in zwei Leitungsteile 39 und 40 unterteilt. Dem entsperrbaren Rückschlagventil ist ein Schaltventil 41 zugeordnet, welches elektro-magnetisch durch ein Signal in der elektrischen Leitung 42 von der Regelelektronik 23 austeuerbar ist. Dieses Schaltventil 41 führt in seiner einen Schaltstellung offen in bekannter Weise Stellmedium einer Steuerfläche des Schließkörpers des Rückschlagventils 38 zu, so daß das Rückschlagventil 38 in seiner offenen, entsperrten Stellung festgehalten wird. Das Steuermedium ist über eine Leitung 43 aus der Arbeitsdruckleitung 17 abgezweigt. In der anderen Schaltstellung des Schaltventils 41 ist die Steuerfläche des Schließgliedes des Rückschlagventils 38 über die Leitung 44 mit dem Tank verbunden (gezeigte Stellung des Schaltventiles 41. Das Rückschlagventil 38 ist nicht entsperrt, sondern befindet sich in seiner Sperr-Funktionsstellung). Der Teil 40 der Arbeitsdruckleitung 17 zwischen Rückschlagventil 38 und Sekundäreinheit 2 ist über eine Steuerleitung 46 mit dem zweiten Druckregelventil 27 des Druck-Förderstromreglers 21 der Primäreinheit 1 verbinden, so daß der Steuerschieber des Druckregelventiles 27 parallel zur Feder 28 mit einem Stelldruck entsprechend dem Druck in der Arbeitsdruckleitung 40 beaufschlagbar ist.

Die Funktionsweise des erfindungsgemäßen hydrostatischen Getriebes wird anhand des vorstehend beschriebenen Schaltschemas wie folgt beschrieben : Im Ruhezustand bei nicht laufender Antriebsmaschine für die Primäreinheit 1 sind sowohl die Primäreinheit 1 als auch die Sekundäreinheit 2 durch die Federn 9 bzw. 16 ihrer Verstelleinrichtungen auf maximales Fördervolumen, Schwenkwinkel +$\alpha$, eingestellt. Das entsperrbare Rückschlagventil 38 ist durch entsprechende Schaltstellung des Schaltventiles 41 wie dargestellt in Sperr-Funktionsstellung, also geschlossen.

Wird die Antriebsmaschine für die Primäreinheit 1 unter Einspeisung eines Drehmomentes an ihrer Welle 3 in Betrieb gesetzt, baut sich in der Arbeitsdruckleitung 17 ein Arbeitsdruck gegen das geschlossene Rückschlagventil 38 auf. In der Steuerleitung 25 steht dieser sich aufbauende Druck ebenfalls an und wirkt auf die Steuerschieber des ersten Druckregelventiles 24 und des zweiten Druckregelventiles 27 gegen die einstellbare Kraft der Federn 26 bzw. 28. Beispielsweise ist die Feder 26 des ersten Druckregelventiles 24 auf einen Druck von 250 bar, entsprechend dem gewünschten Arbeitsdruck des Getriebes, eingestellt und die Feder 28 des zweiten Druckregelventiles 27 auf einen Druck von 20 bar entsprechend einem Standby-Druck. Da die Feder 28 auf einen geringeren Druck eingestellt ist, öffnet das zweite Druckregelventil 27 bei Erreichen des Druckes von 20 bar in der Arbeitsdruckleitung 17 und der Steuerleitung 25. Es wird Steuermedium in den Zylinderraum 10 geleitet und die Primäreinheit 1 durch ihre Verstelleinrichtung 5 aus der maximalen Fördervolumeneinstellung zurückgeschwenkt in Richtung der Null-Fördervolumen-Mittellage, so weit, wie zur Aufrechterhaltung des eingestellten Standby-Druckes von 20 bar erforderlich ist. Der Standby-Druck von beispielsweise 20 bar steht auch in der Steuerleitung 32 an der Sekundäreinheit 2 an. Diese wird durch den Standby-Druck von 20 bar gegen die Feder 16 in die Null-Fördervolumen-Mittellage entsprechend Schwenkwinkel $\alpha = 0$ geschwenkt. Das Getriebe ist in Standby-Betrieb.

Soll die Sekundäreinheit 2 in Betrieb genommen werden bzw. ein von ihr angetriebener Verbraucher in Betrieb gesetzt werden, wir über die Regelelektronik 23 das Schaltventil 41 geschaltet, so daß der in der Steuerleitung 43 ebenfalls anstehende Standby-Druck von 20 bar das Rückschlagventil 38 entsperrt, d.h. in seiner geöffneten Stellung arretiert. Die Sekundäreinheit 2 treibt über die Welle 4 den Verbraucher noch nicht an, da die Einstellung auf Null-Fördervolumen so lange bestehen bleibt, wie von der Regelelektronik über die Leitung 31 noch kein Regelsignal an das Regelventil 29 gegeben wird, dieses durch die Feder 30 also offen gehalten wird, so daß der Standby-Druck der Leitung 32 im Zylinderraum 15 des Kolbens 13 ansteht. Durch das Entsperren und Öffnen des Rückschlagventiles 38 steht der Standby-Druck von 20 bar auch in der Arbeitsleitung 40 an und wirkt über die Steuerleitung 46 auf den Schieber des zweiten Druckregelventiles 27 des Druck-Förderstromreglers 21 der Primäreinheit 1. Das zweite Druckregelventil 27 wird funktionslos, da der Standby-Druck von 20 bar auf beiden Seiten seines Steuerschiebers ansteht und das Druckregelventil 27 durch die Feder 28 in die gezeigte Stellung geschaltet wird, in welcher der Zylinderraum 10 mit dem Ablauf verbunden wird. Dadurch steigt der Arbeitsdruck in der Arbeitsdruckleitung 17 über den eingestellten Standby-Druck von 20 bar an bis auf den am Druckregelventil 24 durch die Feder 26 eingestellten Arbeitsdruck von beispielsweise 250 bar. Das erste Druckregelventil 24 tritt in Funktion. Solange die Sekundäreinheit 2 wie angegeben in der Null-Fördervolumenstellung bleibt und kein Arbeitsmedium über die Arbeitsleitung 17 aufnimmt, bleibt die Primäreinheit 1 wie beschrieben auf geringes Fördervolumen zurückgeschwenkt, um den Arbeitsdruck von 250 bar der Arbeitsleitung 17 aufrechtzuerhalten.

Soll die Sekundäreinheit 2 einen Verbraucher über ihre Abtriebswelle 4 antreiben, ist an der Regelelektronik ein Drehzahl-Sollwert $n_{soll}$ einzugeben. Da über die Leitung 36 die Regelelektronik 23 eine Drehzahl $n_{ist} = 0$ gemeldet erhält, ebenso über die Leitung 34 die Schwenkwinkelstellung $\alpha_{ist} = 0$, gibt sie über die Leitung 31 ein Regelsignal ab, welches der großen Drehzahlabweichung $n_{soll}-n_{ist}$ entspricht und das Regelventil 29 so ansteuert, daß die Sekundäreinheit 2 auf ein großes Fördervolumen (Schluckvolumen) eingestellt wird, so lange, bis die Ist-Drehzahl der Welle 4 der eingestellten Soll-Drehzahl entspricht. Durch das entsprechende Regelsignal in der Leitung 31 wird das Regelventil 29 in eine Stellung gebracht, welche zu einer Fördervolumeneinstellung der Sekundäreinheit führt, welche der eingestellten Soll-Drehzahl (nach Drehrichtung und Größe) entspricht. Wird die Drehzahl der Sekundäreinheit $n_{ist}$ höher als die an der Regelelektronik 23 eingestellte Soll-Drehzahl $n_{soll}$ und entsprechend der Schwenkwinkel $\alpha_{ist}$ größer als der Ist-Drehzahl $n_{ist}$ entsprechen würde (bei vorgegebenem konstanten Arbeitsdruck von beispielsweise 250 bar besteht eine feste Beziehung zwischen Schwenkwinkel $\alpha$ und Drehzahl $n$ der Sekundäreinheit), wird die Regelektonik 23 in der Leitung 21 ein Regelsignal abgeben, welches das Regelventil 29 in eine Stellung bringt, in welcher Steuermedium über die Leitung 32 dem Zylinderraum 15 zugeführt wird, um die Sekundäreinheit 2 auf kleineres Fördervolumen (Schluckvolumen) zurückzuschwenken. Wird durch diese Regelmaßnahme die Ist-Drehzahl $n_{ist}$ nicht erreicht, wird die Sekundäreinheit 2 weitere zurückgeschwenkt durch die Null-Fördervolumen-Mittellage hindurch auf negatives Fördervolumen, was anzeigt, daß ein Drehmoment vom Verbraucher über die Welle 4 an die Sekundäreinheit 2 abgegeben wird. Es besteht Bremsbetrieb, die Sekundäreinheit 2 fördert Arbeitsdruckmedium in die Arbeitsdruckleitung 17. Die Sekundäreinheit 2 arbeitet als Pumpe. Die sich daraus ergebende Druckerhöhung in der Arbeitsdruckleitung 17 über die eingestellten, beispielsweise 250 bar, hinaus führt durch das erste Druckregelventil 24 des Druck-Fördervolumenreglers 21 der Primäreinheit 1 zu einem Zurückschwenken der Primäreinheit 1 auf kleineres Fördervolumen durch die Null-Fördervolumen-Mittellage hindurch bis zu negativem Fördervolumen. Die Primäreinheit 1 arbeitet als Motor und gibt ihr Drehmoment an ihre Antriebsmaschine ab. Die Primäreinheit 1 arbeitet als Pumpe unter Beibehaltung ihrer Drehrichtung.

Es ist im Rahmen der Erfindung auch möglich, den Verstelleinrichtungen 5, 6 jeweils einen einzigen, in Fig. 4 als Alternative für die Sekundäreinheit dargestellten Verstellzylinder 51 mit einem durch das Steuermedium beiderseits beaufschlagbaren Stellkolben 52 zuzuordnen, der durch Federn 53 mittenzentriert ist. Die Arbeitsräume 54, 55 des Verstellzylinders 51 sind mittels eines als Proportionalventil ausgestalteten Wechselventils 56, dessen Ventilschieber 57 durch einen auf wenigstens einer Seite angeordneten einstellbaren Elektromagneten 58 verstellbar ist, wahlweise mit der Steuerleitung 32 bzw. mit dem Rücklauf 44 verbindbar. Wie schon beim vorbeschriebenen Ausführungsbeispiel ist auch hier der Elektromagnet 58 durch eine elektrische Signalleitung 31 mit der Regelelektronik 23 verbunden, und dem Stellkolben 52 ist ebenfalls ein mit der Regelelektronik 23 verbundener Wegaufnehmer 33 zugeordnet.

Bei dem erfindungsgemäßen Getriebe wird stets nur ein Vergleich der Ist-Drehzahl mit der Soll-Drehzahl der Sekundäreinheit vorgenommen. Alle daraus resultierenden Regelvorgänge macht das Getriebe selbst in Abhängigkeit von den sich in der Arbeitsdruckleitung 17 ergebenden Druckänderungen gegenüber dem eingestellten Arbeitsdruckwert von beispielsweise 250 bar. Das Getriebe bringt sich selbst in die Antriebs-Betriebsstellung oder die Brems-Betriebsstellung und erlaubt selbsttätig einen Wechsel (Umkehr) des Energieflusses.

Fällt aus irgendeinem Grund ein Signal in den Leitungen 31, 34, 36, 37, 42 der Regelelektronik 23 aus oder ist der eingestellte Drehzahlwert $n_{soll}$ nicht erreichbar oder ist der Drehzahlunterschied $n_{ist}$-$n_{soll}$ zu groß (Überdrehzahl), so schaltet durch Wegfall des Signales in der Leitung 42 das Schaltventil 41 das entsperrbare Rückschlagventil 38 in seine Sperr-Funktionsstellung und schließt es. Befindet sich in diesem Zeitpunkt das Getriebe in Antriebs-Betriebsstellung, fällt der Arbeitsdruck in der Arbeitsdruckleitung 40 ab, und das Getriebe fällt in den oben beschriebenen Standby-Betrieb. Befindet sich des Getriebe in diesem Zeitpunkt im Bremsbetrieb, wird der Bremsarbeitsdruck über das sich öffnende Rückschlagventil 38 abgebaut, bis der Verbraucher der Sekundäreinheit 2 abgebremst ist. Erst dann fällt das Getriebe in den Standby-Betrieb.

## Ansprüche

1. Hydrostatisches Getriebe bestehend aus einer von einer Antriebsmaschine drehangetriebenen Pumpe (1) (Primäreinheit) und einem einen Verbraucher drehantreibenden Motor (2) (Sekundäreinheit), gebildet jeweils aus einer Hydraulikmaschine veränderbaren Fördervolumens, insbesondere Axialkolbenmaschinen, die in einen offenen Kreislauf zusammenwirken, bei dem die Pumpe (1) Arbeitsmedium aus einem Tank (20) ansaugt, mit dem Motor (2) über eine Arbeitsdruckleitung (17) verbunden ist und der Motor (2) das Arbeitsmedium an den Tank (20) abgibt, bei dem
   – die Pumpe (1) und der Motor (2) mittels je einer Fördervolumen-Verstelleinrichtung (5, 6) in ihrer Förderrichtung kontinuierlich über eine Null-Fördervolumen-Mittellage nach zwei Förderrichtungen verstellbar sind,
   – der Fördervolumen-Verstelleinrichtung (5) der Primäreinheit (1) ein Druck-Förderstromregler (21) zugeordnet ist, der durch Fördervolumeneinstellung der Primäreinheit (1) den Druck in der Arbeitsdruckleitung (17) auf einen einstellbaren Wert konstant hält,
   – der Fördervolumen-Verstelleinrichtung (6) der Sekundäreinheit (2) ein Drehzahl-Förderstromregler (22) zugeordnet-ist, der einen Wegaufnehmer (33) zur Erfassung der Förderstromeinstellung aufweist,
   – der Sekundäreinheit (2) eine Drehzahlerfassungseinrichtung (35) zugeordnet ist,
   – und eine Regelelektronik (23) vorgesehen ist, mit welcher der Wegaufnehmer (33) und die Drehzahlerfassungseinrichtung (35) verbunden sind, und welche die Ist-Drehzahl und die Ist-Fördervolumeneinstellung aufnimmt und der Fördervolumen-Verstelleinrichtung der Sekundäreinheit (2) ein Regelsignal zuführt, welches von der Regelelektronik (23) entsprechend einer einstellbaren Soll-Drehzahl gebildet ist.

2. Getriebe nach Anspruch 1, dadurch gekennzeichnet, daß die Fördervolumen-Verstelleinrichtung (5, 6) der Primäreinheit (1) wie auch der Sekundäreinheit (2) einen in Stellrichtung kleineres Fördervolumen bis maximal negatives Fördervolumen einerseits mit Steuermedium beaufschlagbaren Stellkolben (8, 13) aufweist, der andererseits durch eine Feder (9, 16) von der Stellung maximal negatives Fördervolumen über die Null-Fördervolumen-Mittellage der zugehörigen Fördervolumen-Verstelleinrichtung (5, 6) hinaus in Richtung maximal positives Fördervolumen vorgespannt ist.

3. Getriebe nach Anspruch 1, dadurch gekennzeichnet, daß die Fördervolumen-Verstelleinrichtung (5, 6) der Primäreinheit (1) wie auch der Sekundäreinheit (2) einen mit Steuermedium wahlweise auf seiner einen und/oder anderen Seite beaufschlagbaren Stellkolben (52) aufweist, der zwischen seinen Stellungen maximal positives und maximal negatives Fördervolumen durch Federn (53) mittenzentriert ist (Fig. 4).

4. Getriebe nach Anspruch 2 oder 3, dadurch gekennzeichnet, daß der Druck-Förderstromregler (5) der Primäreinheit (1) ein erstes Druckregelventil (24) aufweist, welches einerseits vom Arbeitsdruck in der Arbeitsdruckleitung (17) und andererseits durch eine einstellbare Feder (26) beaufschlagt ist und Arbeitsmedium dem Stellkolben (8) der Fördervolumen-Verstelleinrichtung (5) der Primäreinheit (1) als Steuermedium zuführt oder in den Tank (20) abführt.

5. Getriebe nach einem der Ansprüche 2 bis 4, dadurch gekennzeichnet, daß der Drehzahl-Förderstromregler (6) der Sekundäreinheit (2) ein Regelventil (29) aufweist, welches durch das Regelsignal der Regelelektronik (23) verstellbar ist und Arbeitsmedium dem Stellkolben (13) der Sekundäreinheit (2) als Steuermedium zuführt oder in den Tank (20) abführt.

6. Getriebe nach einem der Ansprüche 1 bis 5, dadurch gekennzeichnet, daß in der Arbeitsdruckleitung (17) ein in Fließrichtung des Arbeitsmediums von der Primäreinheit (1) zur Sekundäreinheit (2) schließendes Rückschlagventil (38) angeordnet ist, welches als entsperrbares Rückschlagventil ausgebildet ist und durch ein von der Regelelektronik (23) geliefertes Signal in seiner geöffneten Stellung arretierbar ist.

7. Getriebe nach Anspruch 6, dadurch gekennzeichnet, daß das entsperrbare Rückschlagventil (38) durch ein Schaltventil (41) hydraulisch schaltbar ist, welches bei Nichtvorhandensein des Signals von der Regelelektronik (23) das Rückschlagventil (38) in seine Sperr-Funktionsstellung schaltet.

8. Getriebe nach Anspruch 4 und 6 oder 7, dadurch gekennzeichnet, daß der Druck-Förderstromregler (21) der Primäreinheit (1) ein zweites Druckregelventil (27) aufweist, welches dem ersten Druckregelventil (24) funktionell parallel geschaltet ist und welches einerseits vom Arbeitsdruck in der Arbeitsdruckleitung (39) zwischen Primäreinheit und Rückschlagventil und andererseits durch eine einstellbare Feder (28) sowie dem Druck in der Arbeitsdruckleitung (40) zwischen Rückschlagventil (38) und Sekundäreinheit (2) beaufschlagt ist und Arbeitsmedium dem Stellkolben (8) der Fördermengen-Verstelleinrichtung (5) der Primäreinheit (1) als Steuermedium zuführt oder in den Tank (20) abführt.

9. Getriebe nach Anspruch 8, dadurch gekennzeichnet, daß der Primäreinheit (1) mit Druck-Förderstromregler (21) zwei oder mehrere Sekundäreinheiten (2) mit Drehzahl-Förderstromregler (22), Wegaufnehmer (33), Drehzahlerfassungseinrichtung (35) und Regelelektronik (23) über je ein genanntes entsperrbares Rückschlagventil (38) in der Arbeitsdruckleitung (17) zugeordnet sind.

10. Getriebe nach Anspruch 8, dadurch gekennzeichnet, daß der Primäreinheit (1) mit Druck-Förderstromregler (21) mindestens eine Sekundäreinheit (2) mit Drehzahl-Förderstromregler (22), Wegaufnehmer (33), Drehzahlerfassungseinrichtung (35) und Regelelektronik (23) über ein genanntes entsperrbares Rückschlagventil (38) in der Arbeitsdruckleitung (17) zugeordnet ist und daß an die Arbeitsdruckleitung (17) zwischen Primäreinheit (1) und Rückschlagventil (38) ein weiterer Verbraucher, insbesondere ein Stellzylinder, dessen Zylinderraum über ein Geberregelventil speisbar ist, angeschlossen ist.

## Claims

1. A hydrostatic driving gear comprising a pump (1) (primary unit) rotationally driven by a driving engine and a motor (2) (secondary unit) rotationally driving an end user, each comprising a variable displacement hydraulic engine, in particular axial piston engines, which cooperate with one another in an open circuit in which the pump (1) sucks working medium from a tank (20), is connected through a working pressure line (17) to the motor (2), and the motor (2) discharges the working medium to the tank (20),
   - the pump (1) and the motor (2) each being continuously adjustable by means of a respective displacement adjusting device (5, 6) in respect of their direction of flow through a zero displacement centre position to two directions of flow,
   - the displacement adjusting device (5) of the primary unit (1) is associated with a pressure flow controller (21) which, by setting the displacement of the primary unit (1), keeps the pressure in the working pressure line (17) constant at a settable value ;
   - the displacement adjusting device (6) of the secondary unit (2) has associated with it a speed of rotation flow controller (22) which has a position sensor (33) to detect the flow setting ;
   - a speed of rotation detecting device (35) is associated with the secondary unit (2) ;
   - and electronic control means (23) is provided with which the position sensor (33) and the speed of rotation detecting device (35) are connected, and which receives the actual speed of rotation and the actual displacement settings and supplies a control signal to the displacement adjusting device of the secondary unit (2) which is produced by the electronic control means (23) corresponding to a settable desired speed of rotation.

2. A driving gear according to claim 1, characterised in that the displacement adjusting device (5, 6) of the

9

primary unit (1), like that of the secondary unit (2), has an adjusting piston (8, 13) which can be acted on the one side by control medium in the direction of adjustment to smaller displacement to maximum negative displacement and which on the other side is prestressed by a spring (9, 16) from the maximum negative displacement setting through the zero displacement centre position of the respective displacement adjusting device (5, 6) towards maximum positive displacement.

3. A driving gear according to claim 1, characterised in that the displacement adjusting device (5, 6) of the primary unit (1), like that of the secondary unit (2), has an adjusting piston (52) which can be acted on by control medium as desired on its one and/or other side, and which is centred between its maximum positive and maximum negative displacement settings by springs (53) (Fig. 4).

4. A driving gear according to claim 2 or claim 3, characterised in that the pressure flow controller (5) of the primary unit (1) has a first pressure control valve (24) which is acted on on the one side by the working pressure in the working pressure line (17) and on the other side by an adjustable spring (26) and supplies working medium as control medium to the adjusting piston (8) of the displacement adjusting device (5) of the primary unit (1) or discharges it to the tank (20).

5. A driving gear according to any one of claims 2 to 4, characterised in that the speed of rotation flow controller (6) of the secondary unit (2) has a control valve (29) which is adjustable by the control signal of the electronic control means (23) and supplies working medium as control medium to the adjusting piston (13) of the secondary unit (2) or discharges it to the tank (20).

6. A driving gear according to any one of claims 1 to 5, characterised in that a check valve (38) closing in the direction of flow of the working medium from the primary unit (1) to the secondary unit (2) is arranged in the working pressure line (17), said check valve comprising a pilot-operated check valve which can be held in its open position by a signal delivered from the electronic control means (23).

7. A driving gear according to claim 6, characterised in that the pilot-operated check valve (38) can be switched hydraulically by a pilot valve (41) which, when there is no signal from the electronic control means (23), switches the check valve (38) to its blocked operating position.

8. A driving gear according to claim 4 and 6 or 7, characterised in that the pressure flow controller (21) of the primary unit (1) has a second pressure control valve (27) which is connected functionally in parallel with the first pressure control valve (24) and which is acted on on the one side by the working pressure in the working pressure line (39) between the primary unit and the check valve and on the other side by both an adjustable spring (28) and the pressure in the working pressure line (40) between check valve (38) and secondary unit (2) and supplies working medium as control medium to the adjusting piston (8) of the displacement adjusting device (5) of the primary unit (1) or discharges it to the tank (20).

9. A driving gear according to claim 8, characterised in that two or more secondary units (2) having speed of rotation flow controllers (22), position sensors (33), speed of rotation detecting devices (35) and electronic control means (23) are associated, each through a said pilot-operated check valve (38) in the working pressure line (17), with the primary unit (1) with a pressure flow controller (21).

10. A driving gear according to claim 8, characterised in that at least one secondary unit (2) with speed of rotation flow controller (22), position sensor (33), speed of rotation detecting device, (35) and electronic control means (23) is associated with the primary unit (1) with pressure flow control (21) through a said pilot-operated check valve (38) in the working pressure line (17), and in that, connected to the working pressure line (17) between the primary unit (1) and the check valve (38), there is a further end-user, in particular an adjusting cylinder, whose cylinder space can be fed by a sensor control valve.

## Revendications

1. Transmission hydrostatique, comprenant une pompe (1) entraînée en rotation par une machine motrice (unité primaire), et un moteur (2) entraînant en rotation un appareil d'utilisation (unité secondaire), chaque unité étant formée d'un appareil hydraulique à volume déplacé réglable, en particulier machines à piston axial, qui coopère dans un circuit ouvert dans lequel la pompe (1) aspire le fluide moteur à partir d'un réservoir (20) et est reliée au moteur (2) par une conduite de pression de service (17), et dans lequel le moteur (2) restitue le fluide moteur au réservoir (20) ; dans laquelle :

– la pompe (1) et le moteur (2) sont réglables en continu au moyen de dispositifs (5, 6) de réglage du volume déplacé, dans leur direction de refoulement, dans les deux sens en passant par une position médiane à volume déplacé nul,

– au dispositif (5) de réglage du volume déplacé de l'unité primaire (1) est associé un régulateur de débit et de pression (21), qui maintient constante à une valeur réglable la pression dans la conduite de pression de service (17) par réglage du volume déplacé de l'unité primaire (1),

– au dispositif (6) de réglage du volume déplacé de l'unité secondaire (2) est associé un régulateur de débit et de vitesse de rotation, présentant un capteur de déplacement (33) pour détecter le réglage du débit,

– à l'unité secondaire (2) est associé un dispositif de détection de la vitesse de rotation (35),

– et il est prévu un régulateur électronique (23), auquel sont reliés le capteur de déplacement (33) et le dispositif de détection de la vitesse de rotation (35), et qui enregistre la vitesse de rotation effective et le réglage du volume déplacé effectif, et qui transmet au dispositif de réglage du volume déplacé de l'unité secondaire (2) un signal de réglage qui est formé par le régulateur électronique (23) en fonction d'une vitesse de rotation de consigne réglable.

2. Transmission selon la revendication 1, caractérisée en ce que le dispositif de réglage du volume déplacé (5, 6) de l'unité primaire (1) comme de l'unité secondaire (2) présente un piston de réglage (8, 13) soumis au fluide de commande dans le sens du réglage vers un volume déplacé plus petit jusqu'à un volume déplacé négatif maximal d'une part, qui est d'autre part précontraint au moyen d'un ressort (9, 16), depuis la position où le volume déplacé négatif est maximal, vers la poition où le volume déplacé positif est maximal, en passant par la position médiane où le volume déplacé est nul, du dispositif de réglage du volume déplacé (5, 6) concerné.

3. Transmission selon la revendication 1, caractérisée en ce que le dispositif de réglage du volume déplacé (5, 6) de l'unité primaire (1) comme de l'unité secondaire (2) présente un piston de réglage (52) soumis au fluide de commande alternativement sur l'une ou l'autre de ses faces selon le choix, qui est centré, par des ressorts (53), entre ses positions de volume déplacé positif maximal et négatif maximal (Fig. 4).

4. Transmission selon les revendications 2 ou 3, caractérisée en ce que le régulateur de la pression et de débit (5) de l'unité primaire (1) présente une première soupape de régulation de la pression (24), laquelle est soumise d'une part à la pression de service dans la conduite de pression de service (17), et d'autre part à un ressort réglable (26), et alimente en fluide moteur, en tant que fluide commande, le piston de réglage (8) du dispositif de réglage du volume déplacé (5) de l'unité primaire (1), ou l'évacue vers le réservoir.

5. Transmission selon les revendications 2 à 4, caractérisée en ce que le régulateur de vitesse de rotation et de débit (6) de l'unité secondaire (2) présente une soupape de réglage (29), laquelle est ajustable par le signal de réglage émis par le régulateur électronique (23),et alimente en fluide moteur, en tant que fluide de commande, le piston de réglage (13) de l'unité secondaire (2), ou l'évacue vers le réservoir.

6. Transmission selon l'une quelconque des revendications de 1 à 5, caractérisée en ce qu'un clapet anti-retour (38) se fermant dans la direction de l'écoulement du fluide moteur depuis l'unité primaire (1) vers l'unité secondaire (2), est disposé dans la conduite de pression de service (17), lequel constitue un clapet anti-retour piloté et susceptible d'être bloqué dans sa position ouverte par un signal émis par le régulateur électronique (23).

7. Transmission selon la revendication 6, caractérisée en ce que le clapet anti-retour piloté (38) est commutable de façon hydraulique par une soupape de commande (41), laquelle commute le clapet anti-retour (38) sur sa position de blocage en l'absence d'un signal émis par le régulateur électronique (23).

8. Transmission selon les revendications 4 et 6 ou 7, caractérisée en ce que le régulateur de pression et de débit (21) de l'unité primaire (1) présente une seconde soupape de réglage de pression (27), montée fonctionnellement en parallèle avec la première soupape de réglage de pression (24), soumise d'une part à la pression de service dans la conduite de pression de service (39) entre l'unité primaire et le clapet anti-retour et d'autre part, à un ressort (28) réglable, ainsi qu'à la pression dans la conduite de pression de service (40) entre le clapet anti-retour (38) et l'unité secondaire (2), et qui alimente en fluide moteur, en tant que fluide de commande, le piston de réglage (8) du dispositif de réglage des quantités déplacées (5) de l'unité primaire (1), ou l'évacue vers le réservoir (20).

9. Transmission selon la revendication 8, caractérisée en ce qu'à l'unité primaire (1) comportant un régulateur de la pression et du débit (21) sont reliées deux ou plusieurs unités secondaires (2) dotées d'un régulateur de vitesse de rotation et de débit (22), d'un capteur de déplacement (33), d'un dispositif de détection de la vitesse de rotation (35), et d'un régulateur électronique (23), chacune par l'intermédiaire d'un clapet anti-retour piloté (38) précité, situé dans la conduite de pression de service (17).

10. Transmission selon la revendication 8, caractérisée en ce qu'à l'unité primaire (1) comportant un régulateur de la pression et du débit (21) est reliée au moins une unité secondaire (2) dotée d'un régulateur de vitesse de rotation et de débit (22), d'un capteur de déplacement (33), d'un dispositif de détection de la vitesse de rotation (35) et d'un régulateur électronique (23) par l'intermédiaire dudit clapet anti-retour piloté (38) situé dans la conduite de pression de service (17) et en ce qu'un autre appareil d'utilisation, notamment un vérin de réglage, dont la chambre est alimentée par une soupape de réglage à capteur, est relié à la conduite de pression de service (17) entre l'unité primaire (1) et le clapet anti-retour (38).

# FIG. 3

**-Ma**

+Q.p
+ a

Pumpenbetrieb

nl ←

-Q.p
- a

Motorbetrieb

+Ma

Primäreinheit

## FIG.1

IV +Ma I

+Q.p
-a

+Q.p
+a

Motorbetrieb

nl ← → nr

-Q.p
+a

-Q.p
-a

Pumpenbetrieb

III -Ma II

Sekundäreinheit

## FIG. 2

**FIG. 4**